# EUROPÄISCHE PATENTSCHRIFT

(11) **EP 0 601 346 B1**
(45) Veröffentlichungstag und Bekanntmachung des Hinweises auf die Patenterteilung: **27.12.1995**
(21) Anmeldenummer: 93118176.2
(22) Anmeldetag: 10.11.1993
(51) Int. Cl.: C03C 8/14, C03C 17/04, C03C 17/00

(54) **Auf Glas- oder Glaskeramiksubstrate aufgebrachte Dekorschichten aus keramischen Farben**
Ceramic colour decoration layers deposited on glass or glass-ceramic substrates
Couches décoratives d'une composition colorante céramique revêtues sur des substrats vitreux ou vitrocéramiques

(30) Priorität: 09.12.1992 DE 4241411
(43) Veröffentlichungstag der Anmeldung: 15.06.1994
(73) Patentinhaber: Schott Glaswerke, 55122 Mainz (DE); Carl-Zeiss-Stiftung trading as SCHOTT GLASWERKE, 55122 Mainz (DE)
(72) Erfinder: Scheidler, Herwig, D-55126 Mainz (DE); Weinberg, Waldemar, Dr., D-55129 Mainz (DE)

(56) Entgegenhaltungen:
- EP-A- 0 364 691
- PATENT ABSTRACTS OF JAPAN vol. 007, no. 131 (C-169)8. Juni 1983 & JP-A-58 045 137 (OKUNO SEIYAKU KOGYO KK) 16. März 1983
- PATENT ABSTRACTS OF JAPAN vol. 013, no. 095 (C-573)6. März 1989 & JP-A-63 274 780 (MATSUSHITA ELECTRIC IND CO LTD) 11. November 1988
- PATENT ABSTRACTS OF JAPAN vol. 016, no. 040 (C-0906)31. Januar 1992 & JP-A-03 247 534 (NIPPON CHEM IND CO LTD) 5. November 1991

## Beschreibung

Die vorliegende Erfindung behandelt auf Borosilikatglas- oder Glaskeramiksubstrate mit Wärmeausdehnungskoeffizienten α ≦ 3 x 10⁻⁶/K aufgebrachte, festhaftende Dekorschichten mit einer für eine durchgehende Beschichtung erforderlichen Schichtdicke, die nach dem Einbrand im Bereich von 4 bis 15 »m liegt, aus keramischen Farben, bestehend aus Grundemail (Fritte) mit einem Wärmeausdehnungskoeffizienten von 6 x 10⁻⁶/K bis 12 x 10⁻⁶/K, Pigmenten und gleichmäßig über das Volumen der Dekorschicht verteilten Glimmerblättchen; und sie hat das Verfahren zur Herstellung solcher Dekorschichten zum Gegenstand.

Zur Dekoration von Borosilikatglas und Glaskeramiken werden keramische Farben eingesetzt. Diese bestehen aus einem oder mehreren glasigen Substanzen (Grundemail oder Fritten) und einer Zumischung von einem oder mehreren Pigmenten (Farbkörpern). Als Pigmente können farbige, anorganische, oxidische Verbindungen verwendet werden, z. B. Spinelle. Hierbei dürfen die Pigmente üblicherweise von den Fritten nicht oder nur geringfügig angegriffen werden (Dispersionsfärbung).

Das Zumischen kann dabei bereits während des Schmelzvorganges der Glasflüsse erfolgen (Einfritten) oder aber vor oder während eines anschließenden Mahlvorganges der Fritten. Die einsatzfähigen keramischen Farben liegen dann als pulverförmige Gemische aus Farbkörpern und Gläsern vor. Die aus Metalloxiden bestehenden Farbkörper sind bis zu einem gewissen Grade in den Glasschmelzen löslich, wobei die Löslichkeit der Farbkörper mit steigender Temperatur der Glasschmelze zunimmt.

Zur Dekorierung von Borosilikatglas- bzw. Glaskeramikgegenständen wird das Farbpulver auf verschiedene Arten auf das zu beschichtende Substrat aufgebracht. Das Pulver kann in mittleren Teilchendurchmessern von weniger als 1 »m bis zu 40 »m vorliegen.

Zur Fixierung der keramischen Farben vor dem Einbrand werden sie in Auftragshilfsmitteln dispergiert, die sich teils beim Trocknen der aufgebrachten Farben, teils beim Brennen verflüchtigen. Beispiele hierfür sind das Vermischen mit Siebdruckölen und der folgende direkte Siebdruck oder der indirekte Siebdruck (Abziehbildverfahren), das Vermischen mit thermoplastischem Material und der folgende Siebdruck unter Wärmeeinwirkung. Werden die keramischen Farben mit entsprechenden organischen Substanzen vermischt, können sie auch auf das Substrat aufgespritzt werden (Spritzfarben).

Die auf das Substrat aufgetragenen Schichten müssen durch Einbrennen zu einer festen Einheit mit dem Substrat verschmolzen werden. Beim Erhitzen schmilzt das Glaspulver und bildet eine kompakte Schicht, in welcher die Pigmente als Farbkörper eingebettet sind.

Bei Borosilikatglas wird der Dekoreinbrand in der Regel gleichzeitig mit der Glaskühlung durchgeführt. Bei Glaskeramiken als Substrat erfolgt der Dekoreinbrand üblicherweise während des Keramisierungsprozesses, das heißt, die Dekore werden auf das Grünglas aufgebracht und während der Keramisierung eingebrannt. Da nun aber die zu beschichtenden Gegenstände bereits in ihrer endgültigen Gestalt vorliegen, dürfen die keramischen Farben nur bei solchen Temperaturen aufgeschmolzen werden, bei denen noch keine Deformation der bereits vorgeformten Substrate erfolgt. Die Fließtemperatur der Fritte der keramischen Farbe muß kleiner oder höchstens gleich der oberen Kühltemperatur (annealing point) des Substrates sein. Die obere Kühltemperatur von Borosilikatgläsern liegt bei ca. 570 °C. Um Deformationen des Substrats beim Einbrand des Grundemails zu vermeiden, müssen keramische Farben, die für diese Gläser geeignet sein sollen bei Temperaturen unterhalb von 600 °C fließen, das heißt, das Grundemail muß bei einer Temperatur von 600 °C eine Viskosität unter ca. 10² Poise aufweisen.

Typische Temperaturen für die Keramisierung von Grundgläsern zur Herstellung von Glaskeramiken liegen im Bereich von ca. 800 - 950 °C, so daß hier Fritten mit höherer Fließtemperatur zur Anwendung kommen können.

Zusätzlich zu diesen Anforderungen an die Eigenschaften der für die keramische Farbe zu verwendenden Fritte, ergibt sich ein weiteres Problem, welches aus den unterschiedlichen Wärmeausdehnungskoeffizienten des Substrats und des Dekormaterials resultiert.
Weichen die Wärmeausdehnungskoeffizienten der keramischen Farbe und des zu beschichtenden Substrates voneinander ab, so treten in dem abgekühlten Körper Spannungen auf. Besitzt die aufgeschmolzene Dekorschicht einen größeren Wärmeausdehnungskoeffizenten als das beschichtete Substrat, tritt im Beschichtungsmaterial eine Zugspannung auf, besitzt sie jedoch einen kleineren Wärmeausdehnungskoeffizienten als das Substrat, kommt sie unter Druckspannungen. Die Größe dieser Spannungen ist von der Differenz der Wärmeausdehnungskoeffizenten abhängig.
Borosilikatgläser besitzen einen Ausdehnungskoeffizienten α von etwa 3 x 10⁻⁶/K, während der Wärmeausdehnungskoeffizient α von Glaskeramik ± 0,2 x 10⁻⁶/K ist.

Ein typisches Frittenmaterial für keramische Farben sind Blei- oder Bleiboratgläser, welche in großer Zahl und preiswert im Handel erhältlich sind, und die erforderlichen niedrigen Fließtemperaturen unter 600 °C aufweisen.
Blei- bzw. Bleiboratgläser besitzen aber Wärmeausdehnungskoeffizienten im Bereich von ca. 6 x 10⁻⁶/K bis 12 x 10⁻⁶/K. Aus der großen Differenz der Wärmeausdehnungskoeffizienten resultieren nach der Abkühlung Zugspannungen, so daß Krakelees entstehen, deren Einrisse bis in das Substratmaterial einlaufen können. Auch die Temperaturwechselbeständigkeit ist bei so beschichteten Gegenständen reduziert.
Diese Nachteile können nach dem Stand der Technik nur dadurch gemildert werden, daß die Wärmeausdehnungskoeffizienten der keramischen Farben an die Ausdehnungskoeffizienten der zu beschichtenden Substrate angepaßt sind. Dies würde jedoch keramische Farben mit so hohem Schmelzpunkt bedingen, daß die Gefahr von Deformationen für bereits vorgeformte Borosilikatglas- bzw. Glaskeramiksubstrate bestünde.

Die aus einer Fehlanpassung der Wärmeausdehnungskoeffizienten resultierenden Spannungen bedingen aber nach einiger Zeit ein Abplatzen der Farbschicht. Dies kann nach dem Stand der Technik nur dadurch verhindert werden, daß man eine sehr dünne Farblage einbrennt, um so die resultierenden Spannungen nach dem Einbrand noch unterhalb der Belastungsgrenze zu halten. Dies bedeutet aber, daß die Farbwirkung (Deckkraft, Farbeindruck) zum Teil erheblich eingeschränkt wird. Ein weiterer damit verbundener Nachteil ist, daß solche dünnen Farblagen beim Einbrennen dazu neigen, auf der Oberfläche des zu beschichtenden Substrats einzelne Domänen auszubilden, so daß die Oberfläche wesentlich rauher ist, als bei einer durchgängigen Farbschicht. Als Folge können sich dann wichtige Gebrauchseigenschaften, wie die chemische Beständigkeit gegenüber Säuren oder Laugen bei der Reinigung oder das Abriebverhalten deutlich verschlechtern. Auch der Glanz von rauhen Oberflächen ist im Vergleich zu durchgängigen, glatten Oberflächen wesentlich geringer.
Ein weiterer Nachteil, welcher die Beschichtung mit keramischen Farben aus bleifreier Fritte auf Borosilikatglas erschwert, ist die Tatsache, daß solche bleifreien Farben aufgrund ihrer niedrigeren Elastizität sehr spröde sind und daher eine geringe Haftung auf dem Substrat aufweisen. Sie lassen eine für einen vorteilhaften Farbeindruck einer Dekorschicht erforderliche Schichtdicke für die keramischen Farben daher nicht zu.

Die Patent Abstracts of Japan, Vol. 7, No. 131 (C-169); & JP-A-58045137 offenbaren eine keramische Farbzusammensetzung die aus 70 - 90 % Glaspulver (Borosilikat oder Bleiborosilikat mit Schmelztemperaturen von 400 - 700 °C), 10 - 25 % Lüsterpigment (z. B. beschichtete Glimmer) und 0 - 10 % anorganischem Pigment besteht, und für die dekorative Beschichtung von Glasprodukten verwendet wird.

Diese Farbzusammensetzung wird als dünner Film auf übliche Glas- oder Keramiksubstrate aufgebracht, deren Wärmeausdehnungskoeffizient nahe bei dem Wärmeausdehnungskoeffizienten der Farbzusammensetzung selbst liegt. Die hier als Perlglanzpigmente unter anderem eingesetzten, und mit TiO₂-beschichteten Glimmer, dienen bei dieser Farbzusammensetzung ausschließlich dekorativen und schmückenden Zwecken und bestimmen das optische Erscheinungsbild der Beschichtung.

Aus den Patent Abstracts of Japan, Vol. 13, No. 95, (C-573), & JP-A-63247780 ist es bekannt, daß der Zusatz von synthetischen Glimmern in einer Emailschicht, die auf ein metallisches Substrat aufgebracht wird, eine dämpfende Wirkung auf Temperaturschock und mechanischen Stoß in der Emailschicht selbst aufweist.

Die hier eingesetzten, goldenen Glimmer sind synthetisch und fluor-haltig. Sie wären nach vorliegender Erfindung nicht einzusetzen, da durch den Fluoranteil eine bei niedrigen Temperaturen einsetzende, unerwünschte Reaktion der Glimmer mit dem Grundemail und/oder den Pigmenten eintreten würde, die die Funktion der Glimmer als Kompensationsmedium der Wärmedehnung zwischen Substrat und Dekorschicht erheblich reduzieren würde.

Die EP 0 364 691 A1 zeigt ein Verfahren zur Herstellung von leuchtkräftigen Dekoren mit guter Abriebbeständigkeit auf Keramik und silikatischen Unterlagen, wie Porzellan, Steinzeug, Steingut, Email oder Glas, durch Einbrennen von Dekorfarben sowie Lüster- und Edelmetallpräparaten, wobei als Dekorfarbe ein Gemisch aus einem Glasfluß und einem Glimmerpräparat verwendet wird, bei dem die Glimmerplättchen mit einer dünnen Schicht aus einem Metalloxid (Titandioxid oder Eisenoxid) beschichtet sind, und die Dekorfarbe und das Lüster- und Edelmetallpräparat einzeln oder zusammen bei 500 bis 1100 °C eingebrannt werden.
Aus dieser Schrift geht hervor, daß die mit Titandioxid beschichteten Glimmerblättchen 30 »m mittlere Größe aufweisen können.

Die vorliegende Erfindung hat die Aufgabe, Dekorschichten aus keramischen Farben mit sowohl bleihaltigen als auch befreien Fritten zur Verfügung zu stellen, welche sich auf Borosilikatglas- und Glaskeramiksubstraten in einer für eine farbintensive, festhaftende und durchgehende Beschichtung erforderlichen Schichtdicke nach herkömmlichen Methoden einbrennen lassen, um die oben angeführten Nachteile zu beseitigen und eine Verbesserung der Gebrauchseigenschaften zu erzielen.

Des weiteren ist es Aufgabe der Erfindung ein Verfahren zur Herstellung von mit keramischen Farben beschichteten Substraten aus Borosilikatglas- oder Glaskeramikkörpern bereitzustellen, insbesondere auch zur Beschichtung mit befreien keramischen Farben.

Die Aufgabe wird in bezug auf die Dekorschichten nach den Merkmalen des Anspruchs 1 gelöst, in bezug auf das Verfahren nach den Merkmalen der Ansprüche 7 oder 8.

Überraschenderweise wurde gefunden, daß bei Zusatz von 1 - 20 Gew.-% von feinteiligen, unbeschichteten Glimmerblättchen zum Grundemail, trotz sehr großer Unterschiede in den Ausdehnungskoeffizienten zwischen Beschichtung und Substrat, eine Riß- bzw. Krakeleebildung am abgekühlten Schichtkörper nicht auftritt. Diese Materialien weisen aufgrund ihres strukturellen Aufbaus als Schichtsilikate noch eine gewisse Elastizität auf. Durch die Zumischung der Glimmerblättchen zum Grundemail wurden die sonstigen Eigenschaften des Verbundes aus keramischer Farbe und Substrat nicht verschlechtert.

Insbesondere als vorteilhaft erwies sich der Zusatz von Glimmerblättchen in Größen von 20 - 40 »m Durchmesser. Glimmer ist chemisch ein Aluminosilikat mit Kalium, Natrium, Lithium, Calcium, Eisen und Magnesiumzusätzen. Erfindungsgemäß eingesetzt werden können die im Handel erhältlichen Rohmaterialien wie z. B. Muskovit (K-Al-Glimmer), Biotit (K-Mg, Fe²⁺, Al-Glimmer), Paragonit (Na-Al-Glimmer) sowie die Familie der Hydroglimmer (Hydroparagonit, Hydromuskovit) oder der Sprödglimmer wie Margarit CaAl₂(OH)₂ (Al₂Si₂O₁₀) und ähnliche.

Glimmer können unterschiedliche Mengen Wasser, insbesondere zwischen den Schichten einlagern, das beim Erwärmen wieder abgegeben wird.
Werden bei der Beschichtung von Glaskeramiken keramische Farben mit Schmelzpunkten des Grundemails über 900 °C verwendet, ist es daher notwendig, die Glimmerblättchen zuvor einige Stunden bei 900 °C zu brennen, um ihnen das Wasser zu entziehen. Anderenfalls würden durch die Entwässerung und die damit verbundene Gasentwicklung Reaktionen eintreten, welche die Gebrauchseigenschaften der aufgebrannten Farbe negativ verändern könnten.

Über 20 Gew.-% hinausgehende Anteile an Glimmerblättchen tragen zu einer Verschlechterung der Eigenschaften bei. Zu hohe Anteile an Glimmerblättchen beeinträchtigen beim Einbrennen die Oberflächengüte der aufgetragenen Schicht.

Die Zugabe der Glimmerblättchen erfolgt vorteilhafterweise zusammen mit den Pigmenten, d. h. während des Schmelzvorgangs der Glasflüsse oder während des Mahlvorgangs der bereits abgeschreckten Glasflüsse.

Das Auftragen der so hergestellten Farbpulver kann nach bekannten Methoden erfolgen, wie z. B. mittels Abziehbild, Siebdruck oder Spritzverfahren. Die so mit unbeschichteten Glimmerblättchen verstärkten keramischen Farben können auf Borosilikatgläser (Flach- oder Hohlgläser) und auf Glaskeramik aufgebracht und eingebrannt werden. Typische Schichtdicken, welche auf Glaskeramiken aufgetragen werden können, liegen im Bereich von 4 - 5 »m. Dies ist in etwa die doppelte Schichtdicke, welche bisher nach dem Stand der Technik haftfest auf Glaskeramiken erreicht werden konnte.
Die Schichtdicken der keramischen Farben, welche auf Borosilikatgläsern aufgetragen werden können, bewegen sich in der Größenordnung von 10 - 15 »m. Insbesondere lassen sich damit auch bleifreie Farben auf Borosilikatglas fest haftend aufbringen, was nach dem bisherigen Stand der Technik infolge der hohen Sprödigkeit bleifreier Farben nicht möglich war. Mit dem Zusatz unbeschichteter Glimmer läßt sich ein haftfester Einbrand ohne Verformung des Substratglases realisieren.

Die Erfindung wird im folgenden anhand von Ausführungsbeispielen näher erläutert.

Die hergestellten Schichtkörper wurden mit Hilfe folgender Prüfparameter getestet:
1. Die eingebrannte Dekorschicht wird mit einem Streifen transparenten Klebefilms (Tesafilm Typ 104, Firma Beiersdorf AG, Hamburg) beklebt. Der Streifen wird fest angerieben und dann ruckartig abgerissen. Danach wird geprüft, ob Partikel der Beschichtung an dem Film haften.
2. Glasradierer: Ein mit feinkörnigem Siliciumcarbid (Korngröße unter 100 »m) versetztes Gummigemisch wird zu Stangen von 3 cm Kantenlänge verarbeitet. Mit diesem abrasiven Gegenstand wird mindestens zwanzigmal mit leichtem Druck über die Dekorfarbe gerieben. Danach wird die Dekorfarbe auf sichtbaren Abtrag untersucht.

### Beispiel 1:

Auf ein Substrat aus Borosilikatglas mit einer oberen Kühltemperatur von 560 °C wurde eine keramische Farbe (z. B. Farbserie NP 2000, Firma Degussa), bestehend aus einem bleifreien Grundemail und Pigmenten in einer Schichtdicke von ca. 30 »m mittels Abziehbildverfahren aufgetragen.

Der Einbrennprozeß wurde wie folgt durchgeführt:
- Aufheizphase auf Einbrenntemperatur mit einem Temperaturgradienten von 120°C/min.,
- Einbrennen bei einer Temperatur um 600 °C über einen Zeitraum von 3 min,
- Abkühlen auf Raumtemperatur mit einem Temperaturgradienten von 12 °C/min.

Der Abrißtest mit dem Klebefilm ergab folgendes Ergebnis:
Fast über die gesamte beklebte Fläche wurde die Farbe von der Unterlage abgerissen, wobei eine große Anzahl grober Partikel an der Klebefolie haften blieb.

Nach zwanzigmaligem Reiben mit dem Glasradierer waren an der eingebrannten Schicht deutliche Abriebspuren zu erkennen.

### Beispiel 2:

Dem zermahlenen, abgeschreckten Glasfuß der keramischen Farbe nach Beispiel 1 wurden 5 Gew.-% Glimmerblättchen (Muskovit) zugemischt. Die so erhaltene Farbpulvermischung wurde in einem Siebdrucköl (80816, Firma Degussa) suspendiert und mittels Siebdruck auf das Substrat aus Borosilikatglas gemäß Beispiel 1 in einer Dicke von ca. 30 »m aufgetragen. Der Einbrennprozeß erfolgte nach einer Temperaturführung gemaß Beispiel 1 bei ca. 600 °C über einen Zeitraum von 3 min.

Der Abrißtest mit dem Klebefilm ergab folgendes Ergebnis:
Die Schicht erwies sich insgesamt als haftfest. Es konnten keine oder allenfalls sehr wenige, kleine Partikel abgerissen werden.

Der Abrasionstest mit dem Glasradierer nach zwanzigmaligem Reiben zeigte folgendes Ergebnis:

Es ließen sich keine deutlichen Abriebspuren beobachten.

Nach dem Einbrennen hatte die Dekorbeschichtung eine Schichtdicke von ca. 12 »m.

### Beispiel 3:

Eine keramische Farbe, bestehend aus Grundemail und Pigmenten, wurde nach dem Abziehbildverfahren auf ein Grünglas mit einer Schichtdicke von ca. 15 »m aufgetragen. Das Grundemail wies folgende Zusammensetzung auf:

| Gew.-% | | Gew.-% | | Gew.-% | |
|---|---|---|---|---|---|
| Al₂O₃ | 3,14 | K₂O | 0,65 | Sb₂O₃ | 1,89 |
| B₂O₃ | 4,14 | Li₂O | 0,01 | SiO₂ | 24,30 |
| CoO | 0,05 | MnO₂ | 0,09 | TiO₂ | 0,30 |
| Co₂O₃ | 6,82 | Na₂O | 2,95 | ZnO | 4,14 |
| Fe₂O₃ | 5,10 | PbO | 44,20 | ZrO₂ | 0,05 |

Das beschichtete Grünglas wurde einem, wie z. B. aus der DE-PS 37 14 970 oder der GB-A 14 24 526 bekannten Keramisierungsprozeß unterzogen. Die Keramisierung erfolgte im Temperaturbereich von 800 - 950 °C.

Nach dem mit der Keramisierung erfolgten Einbrand der keramischen Farbe wies diese eine Schichtdicke von ca. 5 »m auf.

Der Abrißtest mit dem Klebefilm ergab folgendes Ergebnis:

Eine größere Anzahl grober Partikel blieb am Klebefilm haften.

### Beispiel 4:

Der keramischen Farbe nach Beispiel 3 wurden 5 Gew.-% Glimmerblättchen (Typ: Muskovit), wie in Beispiel 2 beschrieben, zugemischt. Die erhaltende Farbpulvermischung wurde auf das Grünglas nach Beispiel 3 mit dem dort beschriebenen Verfahren aufgebracht. Nach dem mit der Keramisierung gemäß Beispiel 3 erfolgten Einbrennen der keramischen Farbe wies diese eine Schichtdicke von 5 »m auf.

Der Abrißtest mit dem Klebefilm wies folgendes Ergebnis auf:
Die Schicht erwies sich für die praktische Anwendung als haftfest.

## Patentansprüche

1. Auf Borosilikatglas- oder Glaskeramiksubstrate mit Wärmeausdehnungskoeffizienten α ≦ 3 x 10⁻⁶/K aufgebrachte, festhaftende Dekorschichten mit einer für eine durchgehende Beschichtung erforderlichen Schichtdicke, die nach dem Einbrand im Bereich von 4 bis 15 »m liegt, aus keramischen Farben bestehend aus Grundemail (Fritte) mit einem Wärmeausdehnungskoeffizenten von 6 x 10⁻⁶/K bis 12 x 10⁻⁶/K, Pigmenten und gleichmäßig über das Volumen der Dekorschicht verteilten temperaturbeständigen, gegenüber Grundemail und Pigmenten chemisch inerten, unbeschichteten und das durch Grundemail und Pigmente bestimmte optische Erscheinungsbild nicht beeinflussenden Glimmerblättchen mit Durchmessern im Bereich von 20 bis 40 »m in einer Menge von 1 bis 20 Gew.-%.

2. Dekorschicht nach Anspruch 1,
**dadurch gekennzeichnet,**
daß die Schichtdicke der aufgetragenen keramischen Farbe bei Borosilikatgläsern nach dem Einbrand im Bereich von 10 bis 15 »m liegt.

3. Dekorschicht nach Anspruch 1,
**dadurch gekennzeichnet,**
daß die Schichtdicke der aufgetragenen keramischen Farbe bei Glaskeramik nach dem Einbrand im Bereich von 4 bis 5 »m liegt.

4. Dekorschicht nach Anspruch 3,
**dadurch gekennzeichnet,**
daß sie bei 900 °C getemperte Glimmerblättchen enthält.

5. Dekorschicht nach einem der Ansprüche 1 bis 4,
**dadurch gekennzeichnet,**
daß das Grundemail der keramischen Farbe ein Blei- oder Bleiboratglas ist.

6. Dekorschicht nach einem der Ansprüche 1 bis 4,
**dadurch gekennzeichnet,**
daß das Grundemail der keramischen Farbe ein bleifreies Glas ist.

7. Verfahren zur Herstellung von festhaftenden Dekorschichten auf Borosilikatglas nach einem der Ansprüche 1, 2, 5 und 6, bei dem
- der keramischen Farbe aus Grundemail und Pigmenten,
- 1 bis 20 Gew.-% Glimmerblättchen mit Durchmessern von 20 bis 40 »m zugemischt werden,
- die keramische Farbe mittels Abziehbilder, Siebdruck oder Aufsprühen auf das Borosilikatglas aufgebracht wird und
- mit einem anschließenden Temperprozeß bei 550 bis 650 °C eingebrannt wird.

8. Verfahren zur Herstellung von festhaftenden Dekorschichten auf Glaskeramiksubstraten nach einem der Ansprüche 1 und 3 bis 6, bei dem
- der keramischen Farbe aus Grundemail und Pigmenten,
- 1 bis 20 Gew.-%, insbesondere bei 900 °C vorgetemperte Glimmerblättchen mit Durchmessern von 20 bis 40 »m zugemischt werden,
- die keramische Farbe mittels Abziehbilder, Siebdruck oder Aufsprühen auf das noch nicht keramisierte Glaskeramiksubstrat aufgebracht wird und
- mit einem anschließenden Temperprozeß bei 800 bis 950 °C eingebrannt wird.

9. Verfahren nach Anspruch 7 oder 8,
bei dem als Grundemail für die keramische Farbe ein Blei- oder Bleiboratglas verwendet wird.

10. Verfahren nach Anspruch 7 oder 8
bei dem als Grundemail für die keramische Farbe ein bleifreies Glas verwendet wird.

## Claims

1. Adherent decorative layers of ceramic paints comprising base enamel (frit) having a coefficient of thermal expansion of from 6 x 10⁻⁶/K to 12 x 10⁻⁶/K, pigments and, distributed uniformly throughout the volume of the decorative layer, a quantity of from 1 to 20 wt-% mica flakes which are resistant to high temperatures, chemically inert vis-à-vis the base enamel and pigments and uncoated, do not influence the optical appearance determined by the base enamel and pigments and have diameters within the range 20 to 40 »m, which layers are applied to borosilicate glass substrates or glass ceramic substrates having coefficients of thermal expansion of α ≦ 3 x 10⁻⁶/K, and have a layer thickness which is, after stoving, within the range 4 to 15 »m as required for a continuous coating.

2. Decorative layer according to Claim 1, characterised in that the layer thickness of the ceramic paint when applied to borosilicate glasses is, after stoving, within the range 10 to 15 »m.

3. Decorative layer according to Claim 1, characterised in that the layer thickness of the ceramic paint when applied to glass ceramic is, after stoving, within the range 4 to 5 »m.

4. Decorative layer according to Claim 3, characterised in that it contains mica flakes heat-treated at 900°C.

5. Decorative layer according to one of Claims 1 to 4, characterised in that the base enamel of the ceramic paint is a lead glass or lead borate glass.

6. Decorative layer according to one of Claims 1 to 4, characterised in that the base enamel of the ceramic paint is a lead-free glass.

7. Process for producing adherent decorative layers on borosilicate glass according to one of Claims 1, 2, 5 and 6, in which
- from 1 to 20 wt-% mica flakes having diameters of from 20 to 40 »m are admixed to
- the ceramic paint comprising base enamel and pigments, and
- the ceramic paint is applied to the borosilicate glass by means of transfers, screen printing or spraying and
- is stoved at from 550 to 650°C in a subsequent heat treatment process.

8. Process for producing adherent decorative layers on glass ceramic substrates according to one of Claims 1 and 3 to 6, in which
- from 1 to 20 wt-% mica flakes, in particular mica flakes pre-heat-treated at 900°C, having diameters of from 20 to 40 »m are admixed
- to the ceramic paint comprising base enamel and pigments, and
- the ceramic paint is applied to the as yet unceramised glass ceramic substrate by means of transfers, screen printing or spraying and
- is stoved at from 800 to 950°C in a subsequent heat treatment process.

9. Process according to Claim 7 or 8, in which a lead glass or lead borate glass is used as the base enamel for the ceramic paint.

10. Process according to Claim 7 or 8, in which a lead-free glass is used as the base enamel for the ceramic paint.

## Revendications

1. Couches décoratives adhérentes appliquées sur des substrats en verre de borosilicates ou en vitrocéramique dont le coefficient de dilatation thermique α est inférieur ou égal à 3.10⁻⁶K⁻¹, avec une épaisseur nécessaire pour la formation d'une couche continue, qui, après cuisson est comprise entre 4 et 15 »m, lesdites couches décoratives étant constituées de compositions colorantes céramiques composées d'un émail de base (fritte) dont le coefficient de dilatation thermique vaut de 6.10⁻⁶ K⁻¹ à 12.10⁻⁶K⁻¹, de pigments et de paillettes de mica qui sont réparties de façon uniforme dans tout le volume de la couche décorative, sont chimiquement inertes vis-à-vis de l'émail de base et des pigments, ne sont pas enrobées et ne modifient pas l'aspect optique conféré par l'émail de base et les pigments, lesquelles paillettes ont un diamètre compris entre 20 et 40 »m et sont présentes en une quantité allant de 1 à 20 % en poids.

2. Couche décorative selon la revendication 1, caractérisée par le fait que, pour des vertes de borosilicates, l'épaisseur de la couche de composition colorante céramique appliquée est comprise entre 10 et 15 »m après cuisson.

3. Couche décorative selon la revendication 1, caractérisée par le fait que, pour des des vitrocéramiques, l'épaisseur de la couche de composition colorante céramique appliquée est comprise entre 4 et 5 »m après cuisson.

4. Couche décorative selon la revendication 3, caractérisée par le fait qu'elle contient des paillettes de mica traitées thermiquement à 900 °C.

5. Couche décorative selon l'une des revendications 1 à 4, caractérisée par le fait que l'émail de base de la composition colorante céramique est un verre au plomb ou un verre au borate de plomb.

6. Couche décorative selon l'une des revendications 1 à 4, caractérisée par le fait que l'émail de base de la composition colorante céramique est un verre sans plomb.

7. Procédé de fabrication de couches décoratives adhérentes sur du verte de borosilicates selon l'une des revendications 1, 2, 5 et 6, dans lequel
- on incorpore dans la composition colorante céramique formée de l'émail de base et des pigments
- 1 à 20 % en poids de paillettes de mica dont le diamètre est compris entre 20 et 40 »m,
- on applique la composition colorante céramique sur le verte de borosilicates par décalcomanie, sérigraphie ou par pulvérisation et
- on cuit ladite composition colorante au cours d'un cycle consécutif de chauffage à une température comprise entre 550 et 650 °C.

8. Procédé de fabrication de couches décoratives adhérentes sur des substrats en vitrocéramique selon l'une des revendications 1 et 3 à 6, dans lequel
- on incorpore dans la composition colorante céramique formée de l'émail de base et des pigments
- 1 à 20 % en poids de paillettes de mica, notamment de paillettes de mica préalablement traitées thermiquement à 900 °C, dont le diamètre est compris entre 20 et 40 »m,
- on applique par décalcomanie, sérigraphie ou par pulvérisation la composition colorante céramique sur le substrat en vitrocéramique non encore traité et
- on cuit ladite composition colorante au cours d'un cycle consécutif de chauffage à une température comprise entre 800 et 950 °C.

9. Procédé selon la revendication 7 ou la revendication 8, dans lequel on utilise comme émail de base pour la composition colorante céramique un verre au plomb ou un verte au borate de plomb.

10. Procédé selon la revendication 7 ou la revendication 8, dans lequel on utilise comme émail de base pour la composition colorante céramique un verre sans plomb.
